# EUROPEAN PATENT SPECIFICATION

(11) **EP 0 636 348 B1**
(45) Date of publication and mention of the grant of the patent: **25.03.1998**
(21) Application number: 94109429.4
(22) Date of filing: 17.06.1994
(51) Int. Cl.: A61C 13/00, B29C 39/42

(54) **Method of manufacturing medical prosthetic articles, and sealed mold structure for the method**
Verfahren zur Herstellung von medizinischen Prothesen und abgedichtete Giessform zur Durchführung des Verfahrens
Méthode pour la confection de prothèses médicales, et moule étanché utilisé pour sa mise en oeuvre

(30) Priority: 25.06.1993 JP 155604/93; 11.03.1994 JP 79139/94; 17.03.1994 JP 87171/94
(43) Date of publication of application: 01.02.1995
(73) Proprietor: KOGURE, YAMATO, Niigata-shi, Niigata-ken (JP)
(72) Inventor: KOGURE, YAMATO, Niigata-shi, Niigata-ken (JP)
(74) Representative: Viering, Jentschura & Partner

(56) References cited:
- WO-A-86/02259
- DE-A- 1 169 112
- DE-A- 3 016 130
- DE-A- 3 020 793
- GB-A- 2 133 338
- DATABASE WPI Week 8447, Derwent Publications Ltd., London, GB; AN 84-291340 & JP-A-59 179 323 (KOGURE) 11 October 1984
- PATENT ABSTRACTS OF JAPAN vol. 17, no. 221 (C-1054) 7 May 1993 & JP-A-04 357 948 (KOGURE YAMAHITO) 10 December 1992

## Description

### BACKGROUND OF THE INVENTION

### Field of the Invention

The present invention relates to a method of molding a medical prosthetic article and, more particularly, to both a molding method of manufacturing a medical prosthetic article by charging a cavity of a sealed plaster mold under a predetermined vacuum with a resin, and a sealed mold structure for practicing the molding method.

### Description of the Related Art

It has been known in the prior art that medical prosthetic articles such as bedded artificial teeth or artificial bones or limbs to be fitted in human bodies are molded of resins. For this molding process with resins, there have been practiced a compression molding method and an injection molding method, which use a plaster mold fitted in a working mold of a metal or the like. Of these, the compression molding method is carried out by overlaying sheets of a thermoplastic resin in a plaster bottom mold while heating the same with an infrared ray and by compressing the overlaid resin sheets, when softened, with the bottom mold and a top mold. As disclosed by us in Japanese Patent Publication No. 2032/1982, on the other hand, the aforementioned injection molding method is carried out by injecting a molten resin into the cavity of a plaster mold formed in the working mold.

However, each of these methods has been accompanied by a problem that the molten resin may be encountered by a non-homogenous flow or by incorporation of gases produced during the molding process, because the medical prosthetic article often has a complicated shape and/or portions of different thicknesses. Another problem is that the resultant molding may be encountered by a strain such as a warp or twist due to the shrinkage of the resin cooled. Specifically, in case the medical prosthetic article is exemplified by bedded artificial teeth, its portion corresponding to the palatal surface of an upper jaw has to be made as thin as about 0.5 to 1.2 mm whereas its tooth socket head is made as thick as about 10 mm. Thus, the bedded artificial teeth are highly different in their local thicknesses so that the denture base is subjected to a molding strain to float or warp from the inner face of the mold. This molding strain has to be manually corrected by the operator.

Another method and device for manufacturing dental prosthetic articles is disclosed in WO-A-8602259 where a vacuum is applied to the cavity of a mold via a porous material like a plaster.

### SUMMARY OF THE INVENTION

It is, therefore, an object of the present invention to provide a method and a mold of manufacturing a medical prosthetic article while suppressing a molding strain.

Another method and mold of the present invention is to provide a sealed mold structure for practicing the molding method.

This is achieved by the limitations in claims 1 and 8. Advantageous further embodiments are claimed in subclaims.

### BRIEF DESCRIPTION OF THE ACCOMPANYING DRAWINGS

Other objects, features and advantages of the present invention will become apparent from the following description to be made with reference to the accompanying drawings, in which:
Fig. 1 is a vertical section showing a first embodiment of the present invention;
Fig. 2 is a vertical section showing the first embodiment of the present invention;
Fig. 3 is a vertical section showing the first embodiment of the present invention;
Fig. 4 is a vertical section showing the first embodiment of the present invention;
Fig. 5 is a vertical section showing the first embodiment of the present invention;
Fig. 6 is a top plan view showing the first embodiment of the present invention;
Fig. 7 is an exploded vertical section showing a working mold according to the first embodiment of the present invention;
Fig. 8 is a vertical section showing the working mold according to the first embodiment of the present invention;
Fig. 9 is a horizontal section showing a top cover member of the working mold according to the first embodiment of the present invention;
Fig. 10 is a horizontal section showing an upper ring member of the working mold according to the first embodiment of the present invention;
Fig. 11 is a horizontal section showing a bottom cover member of the working mold according to the first embodiment of the present invention;
Fig. 12 is an enlarged vertical section showing an essential portion of a second embodiment of the present invention;
Fig. 13 is an enlarged vertical section showing an essential portion of a third embodiment of the present invention;
Fig. 14 is an exploded vertical section showing a working mold according to a third embodiment of the present invention;
Fig. 15 is an exploded vertical section showing the working mold according to the third embodiment of the present invention;
Fig. 16 is a top plan view showing a top cover member of the working mold according to the third embodiment of the present invention;
Fig. 17 is a top plan view showing an upper ring member of the working mold according to the third embodiment of the present invention;
Fig. 18 is a top plan view showing a bottom cover member of the working mold according to the third embodiment of the present invention;
Fig. 19 is an enlarged vertical section showing an essential portion of a fourth embodiment of the present invention;
Fig. 20 is an enlarged vertical section showing an essential portion of a fifth embodiment of the present invention;
Fig. 21 is a vertical section showing a seventh embodiment of the present invention;
Fig. 22 is a top plan view showing an eighth embodiment of the present invention;
Fig. 23 is a vertical section showing a ninth embodiment of the present invention;
Fig. 24 is a vertical section showing a tenth embodiment of the present invention;
Fig. 25 is a vertical section showing an eleventh embodiment of the present invention;
Fig. 26 is a vertical section showing a twelfth embodiment of the present invention;
Fig. 27 is a vertical section showing the twelfth embodiment of the present invention;
Fig. 28 is a vertical section showing a thirteenth embodiment of the present invention;
Fig. 29 is a vertical section showing the thirteenth embodiment of the present invention;
Fig. 30 is a perspective view showing a fourteenth embodiment of the present invention;
Fig. 31 is an enlarged vertical section showing an essential portion of a fifteenth embodiment of the present invention; and
Fig. 32 is an enlarged vertical section showing an essential portion of a sixteenth embodiment of the present invention.

### DESCRIPTION OF THE PREFERRED EMBODIMENTS

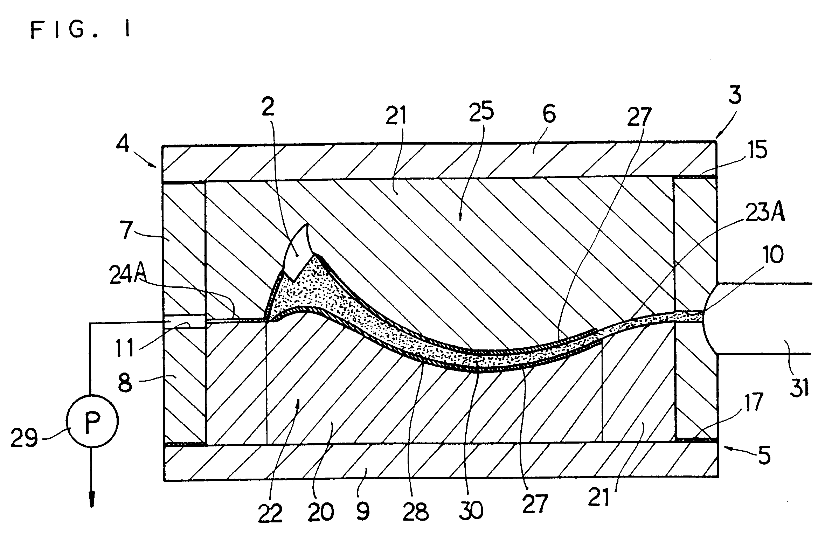

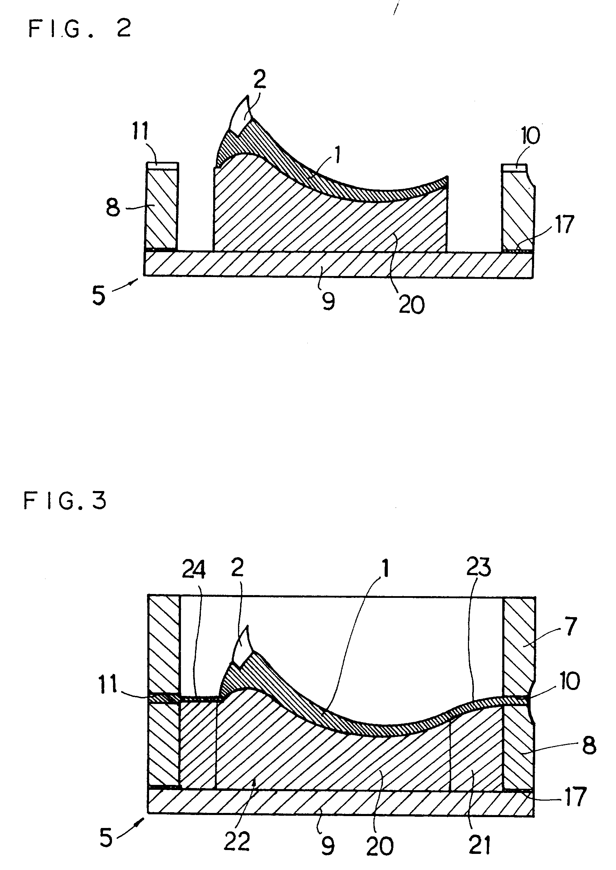

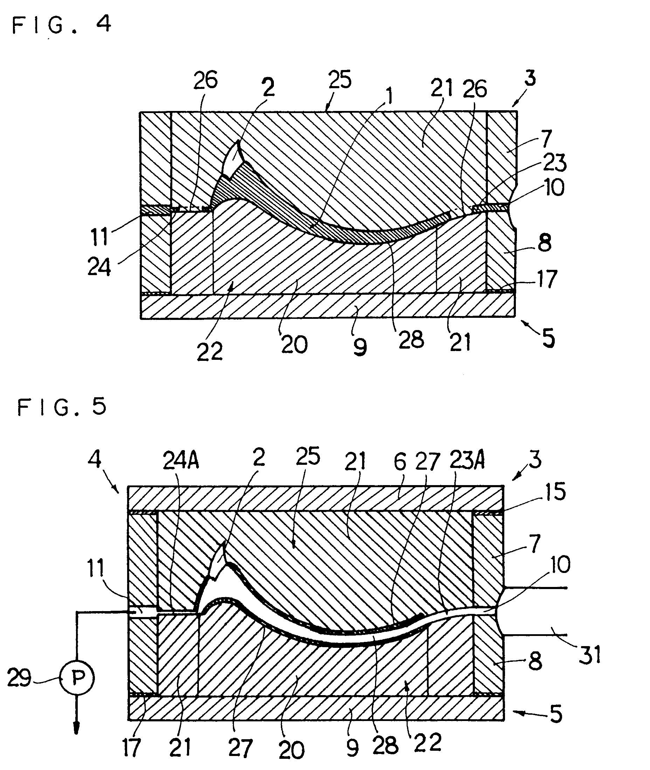

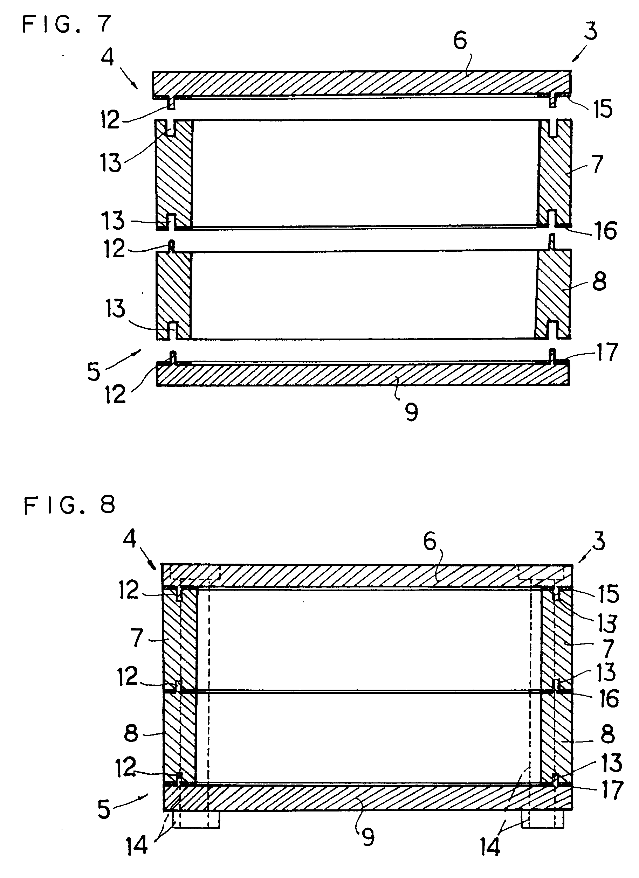

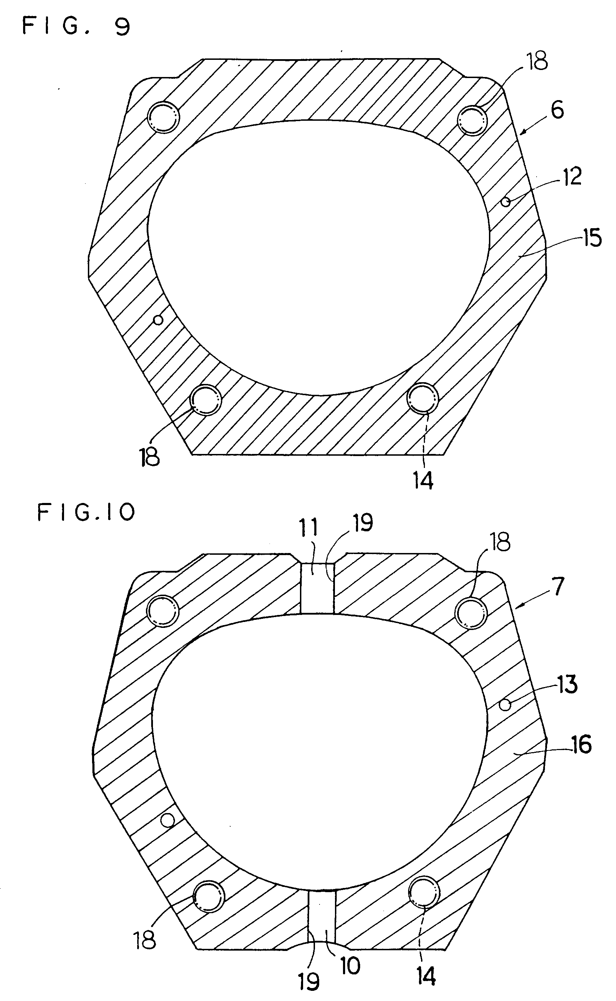

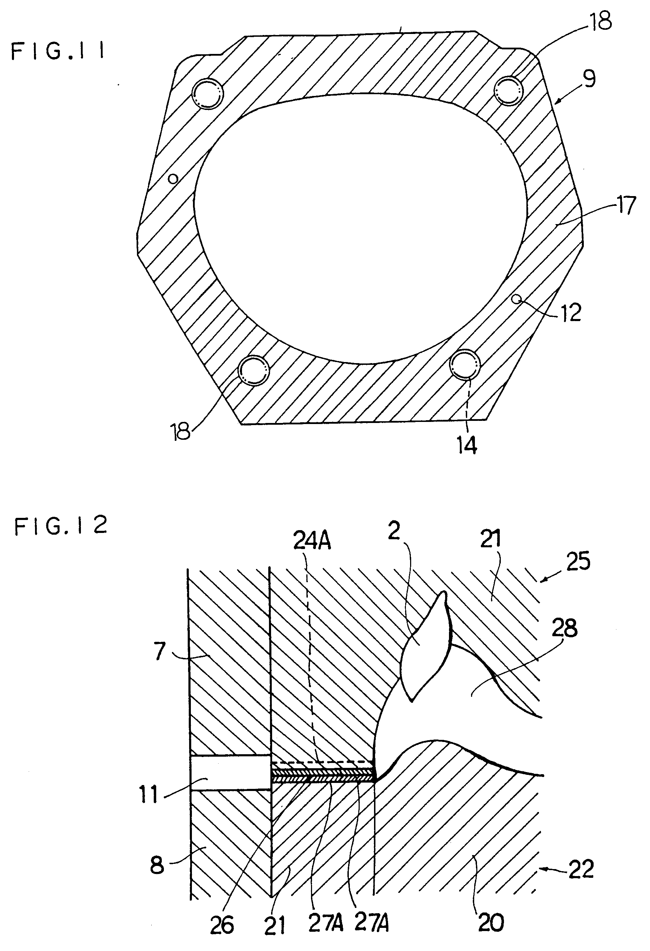

The present invention will be described in the following in connection with its embodiments with reference to the accompanying drawings. In a first embodiment of the present invention, as shown in Figs. 1 to 11, a model having the same shape as that of a medical prosthetic article such as bedded artificial teeth is formed of a thermoplastic material such as wax, synthetic wax or a soft resin. This model 1 is arranged in advance with artificial teeth 2. There is prepared a pressure-resisting working mold 3 which is made of a metallic material. This working mold 3 is constructed of a first mold body 4 and a second mold body 5. Of these, the first mold body 4 is composed of a top cover member 6 or a first separate mold member and an upper ring member 7 or a second separate mold member, and the second mold body 5 is composed of a lower ring member 8 or a third separate mold member and a bottom cover member 9 or a fourth separate mold member. The working mold 3 is formed with an injection port 10 and a discharge port 11 at its abutting faces between the upper and lower ring members 7 and 8. On the other hand, the working mold 3 is equipped with fixing members 14 including bolts and nuts for uniting the first and second mold bodies 4 and 5 when positioned by positioning pins 12 and positioning holes 13. Moreover, the working mold 3 is equipped with a sealing structure which is composed of ring-shaped sealing members made of a thin metallic seat or synthetic resin seat. This sealing structure is composed of: a first sealing member 15 between the abutting faces of the top cover member 6 and the upper ring member 7; a second sealing member 16 between the abutting faces of the upper ring member 7 and the lower ring member 8; and a third sealing member 17 between the abutting faces of the lower ring member 8 and the bottom cover member 9. Of these: the first sealing member 15 is adhered to the top cover member 6; the second sealing member 16 is adhered to the upper ring member 7; and the third sealing member 17 is adhered to the bottom cover member 9. Moreover, these sealing members 15, 16 and 17 are individually formed with positioning/fixing holes 18, and the second sealing member 16 is divided by injection/discharge cutouts 19. With the first and second mold bodies 4 and 5 being disassembled, still moreover, the model 1 is fixed through a plaster bed 20 in the second mold body 5, as shown in Fig. 2, and the model 1 is primarily buried in the second mold body 5 by injecting a plaster wax 21, as shown in Fig. 3, to form a second plaster mold 22 as the plaster wax 21 solidifies. As shown in Fig. 3, the model 1 is connected on one hand to the aforementioned injection port 10 via a sprue runner 23 which is made of the aforementioned thermoplastic material, and on the other to the aforementioned discharge port 11 via an air vent 24 which is also made of the thermoplastic material. As shown in Fig. 4, the upper ring member 7 is then positioned on and assembled with the lower ring member 8, and these two upper and lower ring members 7 and 8 are united by the fixing members 14. The plaster wax 21 is injected into the upper ring member 21 to bury the model 1 secondarily, to form a first plaster mold 25 as the plaster wax 21 solidifies. After the plaster wax 21 has solidified, the upper ring member 7 is disassembled, and the first and second plaster molds 25 22 are divided through a parting face 26 of the plaster 21. The model 1, the sprue runner 23 and the air vent 24 are melted and discharged and are washed away with hot water or the like. The plaster molds 25 and 22 are dried and then formed with sealing layers 27 on their inner faces. These sealing layers 27 are prepared by applying and drying a surfacing agent which has such a hardness and gas-tightness as can stand the injection pressure of the resin. As shown in Fig. 5, the first and second mold bodies 4 and 5 are assembled and united through the fixing members 14 to bring the first and second plaster molds 25 and 22 into a closed state. In this state, there are formed a cavity 28 contoured to the shape of the denture bed, a sprue runner 23A for providing a resin passage, and an air vent 24A for providing a discharge passage of the air/gases. Moreover, the individual abutting portions of the top cover member 6, the upper and lower ring members 7 and 8 and the bottom cover member 9 are made gas-tight by the first, second and third sealing members 15, 16 and 17, and the cavity 28 is also made gas-tight by the sealing layers 27. A vacuum pump 29 is connected to the aforementioned discharge port 11.

Reverting to Fig. 1, a molten high-molecular resin 30 is injected from the aforementioned injection port 10 into the cavity 28 by an injection member 31 of a not-shown molding machine such as an injection molding machine. At this time, the charge of the resin 30 is performed after having evacuated or while evacuating the cavity 28 by the action of the vacuum pump 29. Specifically, this vacuum pump 29 is run before the injection of the resin 30 so that the resin 30 may be injected into the cavity 28 which has been or is being evacuated to a vacuum lower than the atmospheric pressure. The vacuum pump 29 may have its capacity suitably selected by considering the volume of the cavity 28. Here, the degree of vacuum of the cavity 28 is set to 66.10³ to 0,0013 N/m² (500 to 0.00001 Torrs), preferably to 2,66 10³ to 0,0013 N/m² (20 to 0.00001 Torrs). This range is determined because the moldability is hard to improve for a vacuum level lower than 66.10³ N/m² (500 Torrs) whereas the evacuating system and the sealing device grow expensive and poor in practice for a degree of vacuum higher than 0,0093 N/m² (0.00001 Torrs). Since, moreover, the air in the gas-tight cavity 28 and the gases to be released from the molten resin 30 are discharged from the aforementioned discharge port 11 by the evacuation, the resin having filled up the cavity 28 can be restrained from containing the gases. Moreover, the resin 30 has its flow smoothed by the vacuum prevailing in the cavity 28 so that it can ooze into every corners of the cavity 28. As a result, the molding has its residual stress reduced after cooled. Then, the working mold 3 is disassembled, and the plaster molds 25 and 22 are crushed to take out the molding. When this molding is cleared of the resin 30 at the sprue runner 23A and the air vent 24A, it is possible to produce the molding of bedded artificial teeth having its molding strain suppressed.

Thus, according to the present embodiment, the resin 30 can be charged into the cavity 28 evacuated or being evacuated in the plaster molds 25 and 22. Since the air and the gases are sucked and discharged from the cavity 28 via the discharge port 11, the resin 30 having filled up the cavity 28 is restrained from containing the gases and so on, and the resin 30 is allowed to smoothly flow into every corners of the cavity 28 so that the residual stress can be reduced in the cooled molding. Thanks to the molding process after having evacuated or while evacuating the cavity 28, moreover, the resin injection pressure, i.e., the injection pressure of the injection molding machine can be lowered so much. For example, the injection pressure of 230 Kg/cm² without the evacuation can be lowered to about 100 Kg/cm² in case the degree of vacuum in the cavity 28 is lowered to 0.0001 Torrs by the evacuation. As a result, the capacity required of the molding machine can be lowered to reduce the size of the molding machine. At the same time, the linear expansion and accordingly the residual stress are reduced to suppress the strain of the resultant molding. Thanks to the molding process after having evacuated or while evacuating the cavity 28, still moreover, the resin molding temperature can be lowered to reduce the thermal expansion so that thermal shrinkage can be reduced to improve the molding accuracy and to prevent deterioration of the color of the molding. Thus, it is possible to produce a highly accurate molding.

According to the present embodiment, since the sealing layers 27 are formed on the inner faces of the plaster molds 25 and 22 to seal the cavity 28, the air contained in the molds 25 and 22 can be restrained from stealing into the cavity 28 even with the suction of the vacuum pump 29. As a result, it is possible to omit one or two of the first to third sealing members 15 to 17, especially the first and third sealing members 15 and 17. Moreover, since the sealing layers 27 are formed by the coating of the surfacing agent, their smooth surfaces are transferred to the surfaces of the resin 30 so that a lustrous molding can be produced.

In the case of a plaster mold, generally speaking, due to the properties of the plaster material, the resin molding will have different thicknesses at their individual portions, or the resin molding will be difficult to correct even if its individual portions have a dispersion in the resin shrinkage as its structure grows complex. Thus, the resultant resin molding has an accordingly low accuracy. According to the present embodiment, however, the coating of the sealing layers 27 can be given thicknesses according to the degree of resin shrinkages at the individual portions of the molding so that the molding can have its size easily corrected.

Turning to Fig. 12 showing a second embodiment of the present invention, the same portions as those of the foregoing first embodiment are designated at the common reference numerals so that their repeated description is omitted. Specifically, the first and second plaster molds 25 and 22 are individually formed with sealing layers 27A on their abutting faces. Thus, in the present embodiment, the cavity 28 in the plaster molds 25 and 22 can be charged under a predetermined vacuum with the resin 30. As a result, the air and gases in the cavity 28 can be sucked and discharged from the discharge port 11 so that the resin 30 having filled up the cavity 28 can be restrained from containing the aforementioned gases or the like. At the same time, the resin 30 can be allowed to smoothly flow into every corners of the cavity 28 to reduce the residual stress in the cooled molding. Moreover, as the resin injection pressure can be lowered as in the foregoing embodiments, the molding machine can be small-sized to suppress the residual stress. Since the molding temperature can be lowered, still moreover, it is possible to produce a molding which can have an excellent molding accuracy and a clear color. According to the present embodiment, on the other hand, thanks to the sealing layers 27A formed on the abutting faces of the plaster molds 25 and 22, one or two of the first to third sealing members 15 to 17 can be omitted.

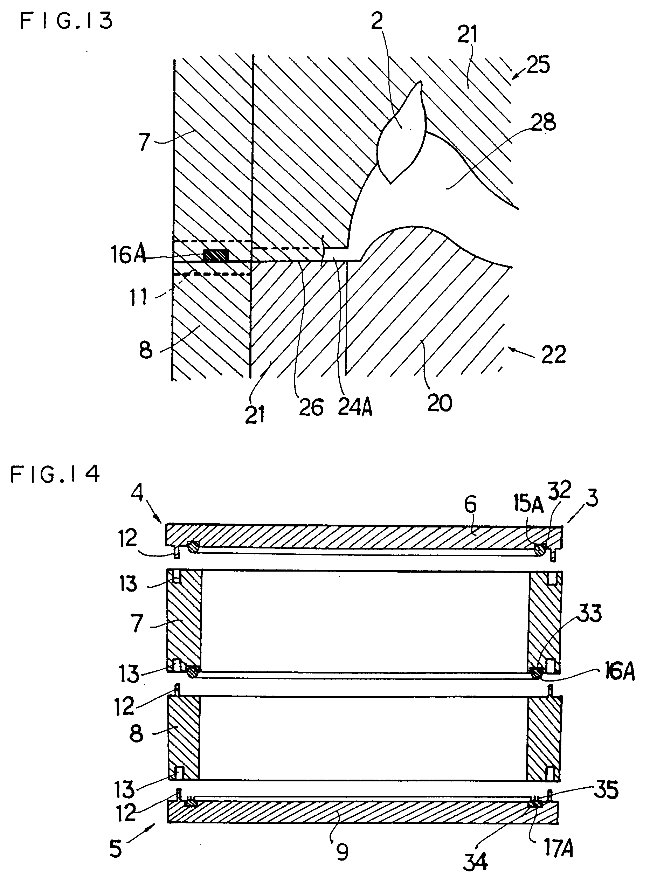

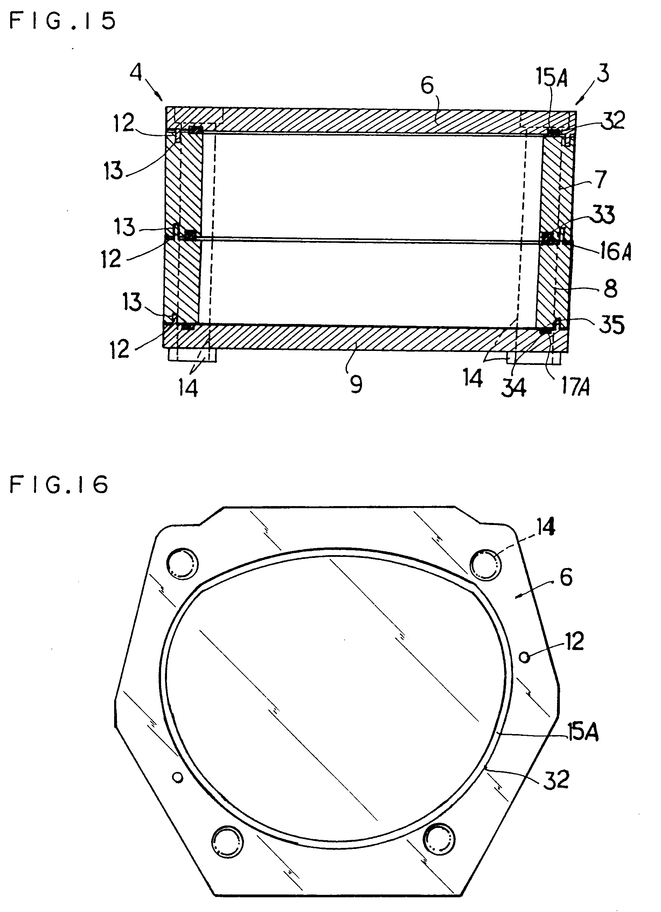

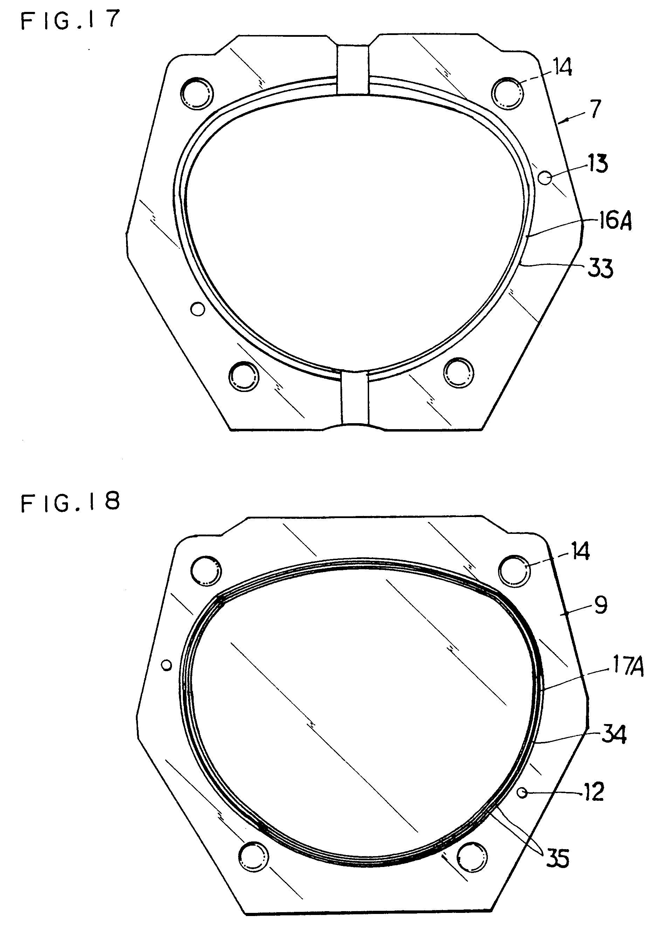

Turning to Figs. 13 to 18 showing a third embodiment of the present invention, the same portions as those of the foregoing embodiments are designated at the common reference numerals so that their repeated description is omitted. According to this third embodiment, the working mold 3 is given a sealing structure which is composed of a sealing packing made of heat resisting synthetic rubber or the like. More specifically, this sealing structure is composed of: an annular first sealing member 15A of a circular section sandwiched between the abutting faces of the top cover member 6 and the upper ring member 7; a linear second sealing member 16A of a circular section sandwiched between the abutting faces of the upper ring member 7 and the lower ring member 8; and an annular third sealing member 17A of a rectangular section sandwiched between the abutting faces of the lower ring member 8 and the bottom cover member 9. Of these: the first sealing member 15A is fitted in a groove 32 which is formed in the top cover member 6 and positioned inside of the fixing portions or positioning portions, as shown in Figs. 14 and 16; the second sealing member 16A is fitted in a groove 33 which is formed in the upper ring member 7 inside of the fixing portions or positioning portions, as shown in Figs. 14 and 17; and the third sealing member 17 is fitted in a groove 34 which is formed in the bottom cover member 9 inside of the fitting portions or positioning portions, as shown in Figs. 14 and 18. The third sealing member 17 is further formed with a plurality of rows of annular ridges 35. Thus, in the present embodiment, the cavity 28 in the plaster molds 25 and 22 can be charged under a predetermined vacuum with the resin 30. As a result, the air and gases in the cavity 28 can be sucked and discharged from the discharge port 11 so that the resin 30 having filled up the cavity 28 can be restrained from containing the aforementioned gases or the like. At the same time, the resin 30 can be allowed to smoothly flow into every corners of the cavity 28 to reduce the residual stress in the cooled molding. Moreover, as the resin injection pressure can be lowered as in the foregoing embodiments, the molding machine can be small-sized to suppress the residual stress. Since the molding temperature can be lowered, still moreover, it is possible to produce a molding which can have an excellent molding accuracy and a clear color.

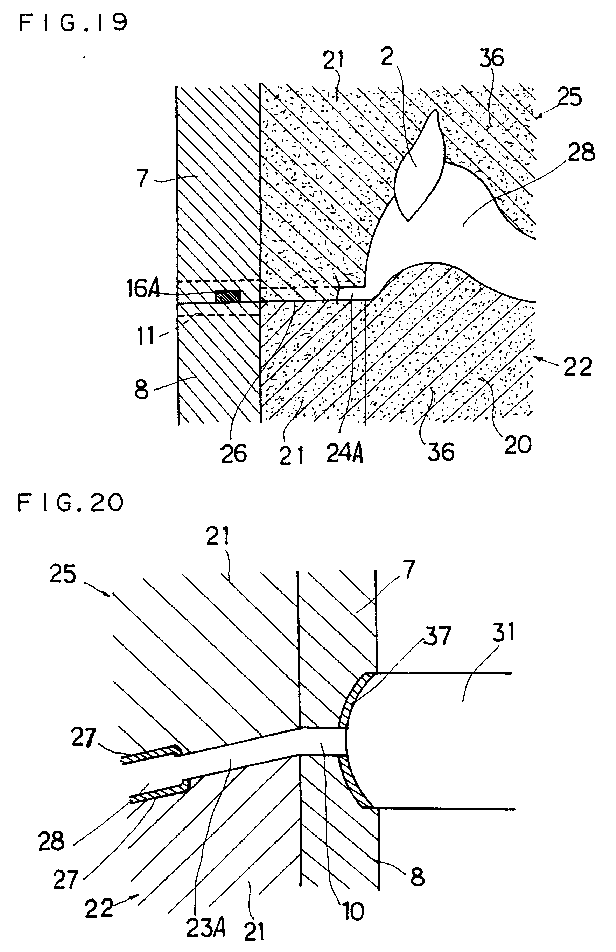

Turning to Fig. 19 showing a fourth embodiment of the present invention, the same portions as those of the foregoing embodiments are designated at the common reference numerals so that their repeated description is omitted. Specifically, the plaster molds 25 and 22 have their plaster 21 impregnated with a resin 36 or the like, and this resin 36 is solidified. As a result, the plaster molds 25 and 22 thus impregnated with the resin 36 can be improved in gas-tightness to omit the sealing members more easily. Thus, the working mold can be cleared of all the sealing members, if desired so.

Turning to Fig. 20 showing a fifth embodiment of the present invention, the same portions as those of the foregoing embodiments are designated at the common reference numerals so that their repeated description is omitted. Specifically, a sealing member 37 is fitted around the injection port 10 of the working mold 3, namely, the portion where the injection port 10 abuts against the leading end of the injection member 31 of the molding machine. The sealing member 37 can retain the gas-tightness at the injection port 10. The entire gas-tightness can be further enhanced by adding the sealing member 37 to any of the sealing structures of the foregoing embodiments. Incidentally, the sealing member 37 can be formed by using the aforementioned surfacing agent or a variety of members having gas-tightness.

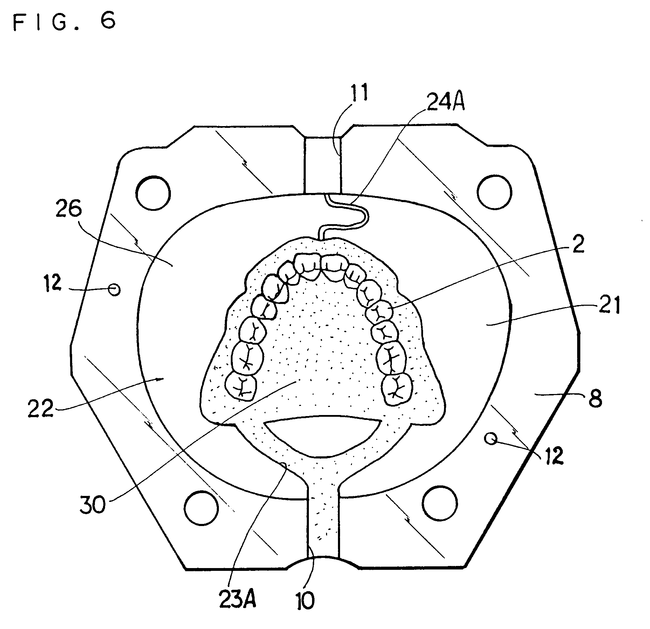

In a sixth embodiment of the present invention, although not shown, the cavity 28 in the plaster molds 25 and 22 and the discharge port 11 are connected via a plurality of gates, as should be referred to Fig. 6. Moreover, the model 1 and the discharge port 11 are also connected via a plurality of air vents 24. Then, the cavity 28 is charged under a predetermined vacuum with the resin 30. If the air vents 24 are oriented in suitable directions, the charged resin 30 can uniformly flow in the cavity 28 to produce a highly accurate molding.

Turning to Fig. 21 showing a seventh embodiment of the present invention, the same portions as those of the foregoing embodiments are designated at the common reference numerals so that their repeated description is omitted. Specifically, the first mold body 4 has its top cover member 6 formed with a discharge port 11A. This discharge port 11A is connected on one hand to the central upper portion of the cavity 28 via the air vent 24A and on the other to the vacuum pump 29. Thus, the discharge port 11A is formed in the top cover member 6 so that the cavity 28 is charged under a predetermined vacuum with the resin 30, to provide effects similar to those of the first embodiment. Alternatively, however, the discharge port may be formed in the bottom cover member 9 of the second mold body 5 and connected to the cavity.

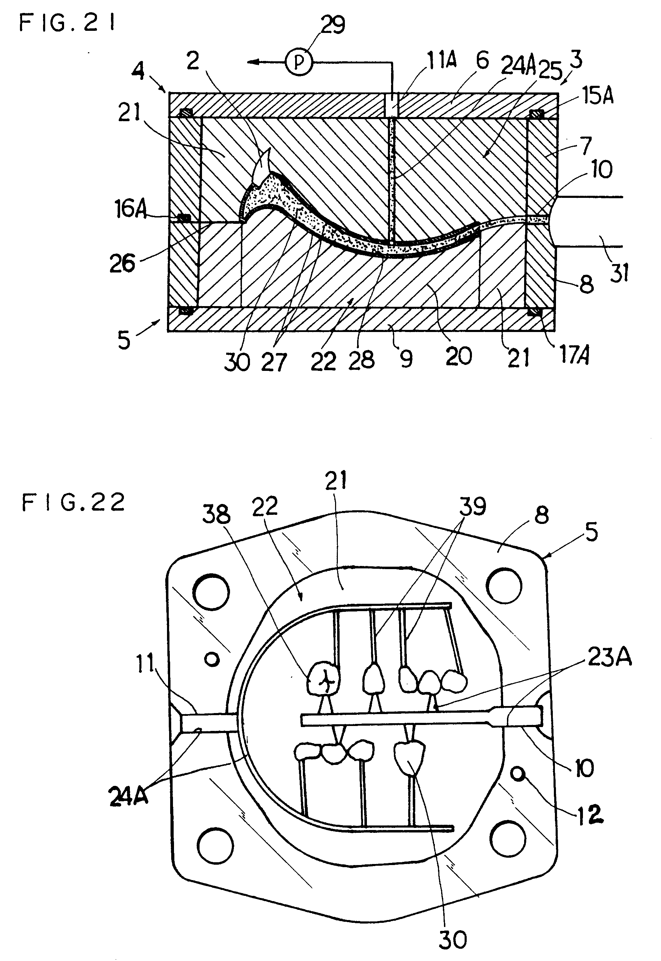

Turning to Fig. 22 showing an eighth embodiment of the present invention, the same portions as those of the foregoing embodiments are designated at the common reference numerals so that their repeated description is omitted. Specifically, the present embodiment is directed to a molding of a medical prosthetic article such as an artificial tooth crown. A plurality of models 38 are formed of a thermoplastic material to have the shapes of artificial crowns and are primarily buried with the plaster wax 21 in the second mold body 5. These models 38 are connected via passages 39 of a thermoplastic material to the injection port 10 by way of the sprue runners 23A. The passages 39 are connected on the other hand to the discharge port via the air vent 24A. Next, the upper ring member 7 is assembled and is charged with the plaster wax 21 to bury the models 38 secondarily. As the plaster wax 21 solidifies, the first and second plaster molds 25 and 22 are formed. Then, these plaster molds 25 and 22 are released and opened to melt, discharge and wash away the models 38, the passages 39, the sprue runners 23A and the air vent 24A so that the cavities shaped to the artificial tooth crowns are left between the plaster molds 25 and 22. These molds 25 and 22 are then closed gas-tight through a suitable one of the seal structures of the foregoing embodiments. The cavities are charged with the resin 30 after they have been or while being evacuated to a predetermined vacuum by the vacuum pump 29. Thus, in the case of the present embodiment, in which the medical prosthetic articles or artificial tooth crowns are to be molded, the plaster molds 25 and 22 are sealed up from the ambient air when they are closed so that the cavities in the plaster molds 25 and 22 can be charged under the predetermined vacuum with the resin 30. As a result, the resin 30 having filled up the cavities can be restrained from containing the gases or the like. At the same time, the resin 30 can be allowed to smoothly flow into every corners of the cavities to reduce the residual stress in the cooled molding so that the residual strain can be suppressed. Moreover, as the resin injection pressure can be lowered as in the foregoing embodiments, the molding machine can be small-sized to suppress the residual stress. Since the molding temperature can be lowered, still moreover, it is possible to produce a molding which can have an excellent molding accuracy and a clear color.

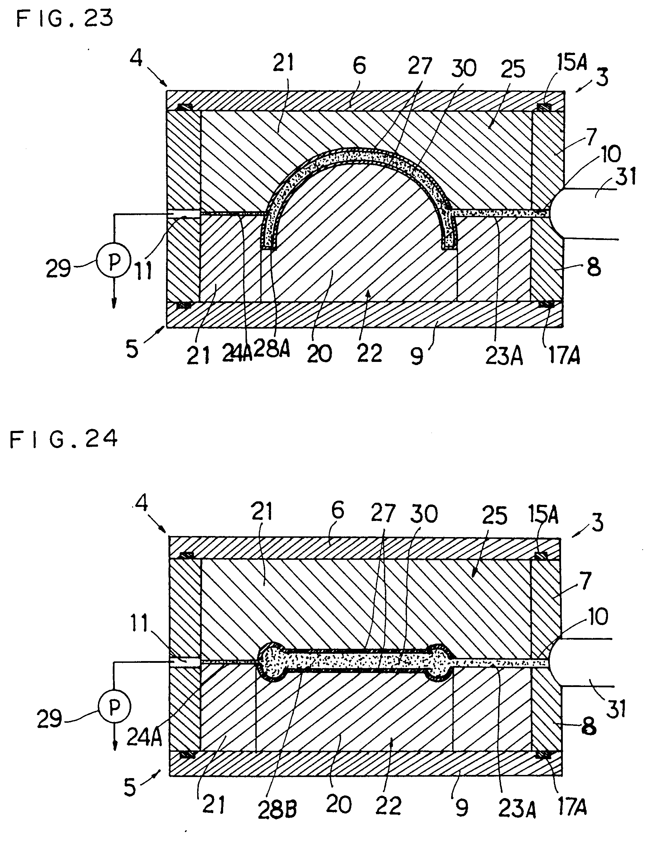

Turning to Fig. 23 showing a ninth embodiment of the present invention, the same portions as those of the foregoing embodiments are designated at the common reference numerals so that their repeated description is omitted. Specifically, the present embodiment is directed to a molding of a medical prosthetic article such as an artificial component to be fitted in an artificial limb. A not-shown model is so formed of a thermoplastic material as to conform to the portion of an artificial leg or hand, in which the artificial component is to be fitted. A cavity 28A is formed to have the shape of the model in the plaster molds 25 and 22. Then, the cavity 28A is charged with the resin 30 to mold the fitting component, after having been or while being evacuated to a predetermined vacuum via the discharge port 11 and the air vent 24A by the vacuum pump 29. Thus, in the case of the present embodiment, in which the medical prosthetic article or artificial limb component is to be molded, the plaster molds 25 and 22 are sealed up from the ambient air when they are closed so that the cavity 28A in the plaster molds 25 and 22 can be charged under the predetermined vacuum with the resin 30. As a result, the resin 30 having filled up the cavity 28A can be restrained from containing the gases or the like. At the same time, the resin 30 can be allowed to smoothly flow into every corners of the cavity 28A to reduce the residual stress in the cooled molding so that the residual strain can be suppressed. Moreover, as the resin injection pressure can be lowered as in the foregoing embodiments, the molding machine can be small-sized to suppress the residual stress. Since the molding temperature can be lowered, still moreover, it is possible to produce a molding which can have an excellent molding accuracy and a clear color.

Turning to Fig. 24 showing a tenth embodiment of the present invention, the same portions as those of the foregoing embodiments are designated at the common reference numerals so that their repeated description is omitted. Specifically, the present embodiment is directed to a molding of a medical prosthetic article such as an artificial long bone, as in the foregoing ninth embodiment. A cavity 28B can be filled up at its every corners with the resin 30, as in the foregoing embodiments.

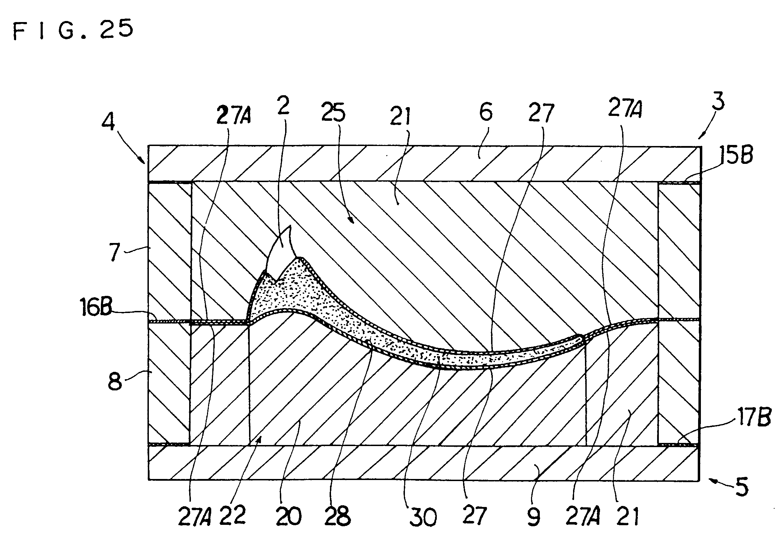

Turning to Fig. 25 showing an eleventh embodiment of the present invention, the same portions as those of the foregoing embodiments are designated at the common reference numerals so that their repeated description is omitted. Specifically, the present embodiment is directed to the case, in which the sealing layers 27 and 27A are formed all over the surfaces of the 25 and 22 in the first embodiment. As a result, the working mold 3 can have its sealing structure simplified. Incidentally, in the present embodiment, the sealing structure has its sealing members 15B, 16B and 17B formed of sealing layers by coating a sealing agent of a thermoplastic resin or the like. However, all of these sealing members 15B to 17B may be eliminated.

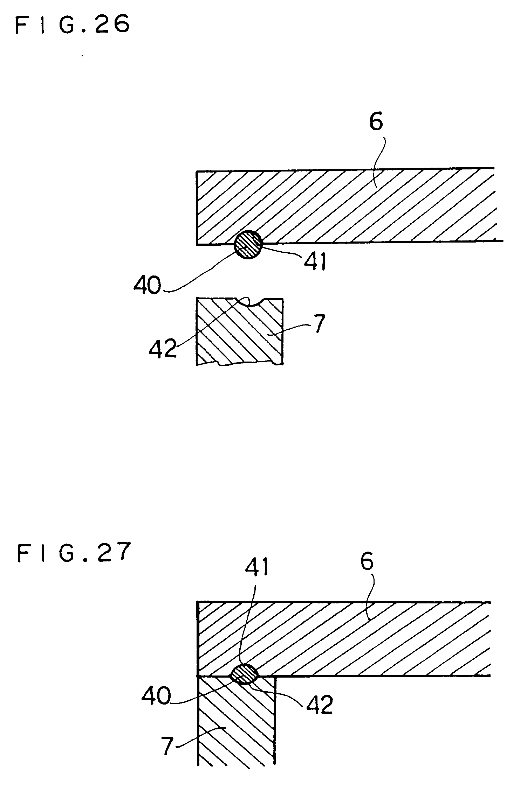

Turning to Figs. 26 and 27 showing a twelfth embodiment of the present invention, the same portions as those of the foregoing embodiments are designated at the common reference numerals so that their repeated description is omitted. Specifically, the present embodiment is directed to the case in which a sealing structure for the working mold 3 is to be formed by using a sealing member 40 having a circular section, as in the fourth embodiment. In this case, the sealing member 40 is fitted in a semicircular groove 41 which is formed in the top cover member 6. At the same time, the upper ring member 7 is formed with a groove 42 shallower than the foregoing groove 41, so that the sealing member 40 may be compressed by the shallower groove 42 when the working mold 3 is integrated. Incidentally, this sealing structure may be applied to all the divided portions of the working mold 3.

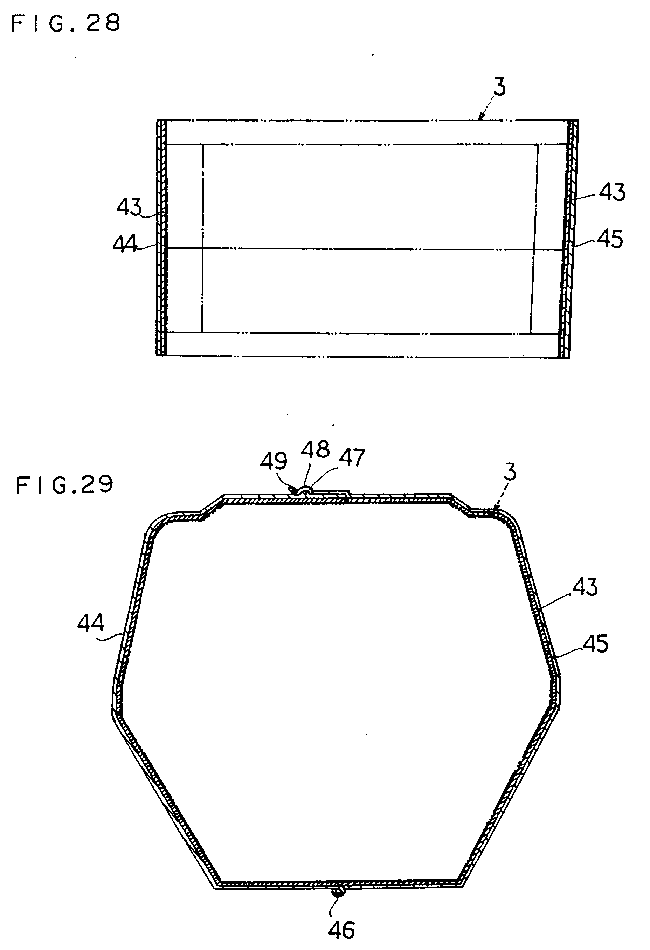

Turning to Figs. 28 and 29 showing a thirteenth embodiment of the present invention, the same portions as those of the foregoing embodiments are designated at the common reference numerals so that their repeated description is omitted. Specifically, the present embodiment is directed to the case, in which the sealing structure is constructed by covering the side peripheries of the divided portions of the working mold 3 with a sealing member 43. This sealing structure is further composed of two divided covers 44 and 45 of a synthetic resin or metal, which are shaped and sized to cover together the side periphery of the working mold 3 substantially in its entirety. These two covers 44 and 45 have their one-end portions hinged at 46, and one cover 44 has its other end formed with a retaining projection 47 whereas the other cover 45 has its other end formed with a retaining recess 48, from which is extended a knob 49. The aforementioned sheet-shaped sealing member 43 is adhered to the inner faces of the two covers 44 and 45. Thus, these covers 44 and 45 are closed on their hinged portions 46 to cover the side periphery of the working mold 3 and are retained by snapping the retaining projection in the retaining recess 48 to seal up the divided portions of the working mold 3.

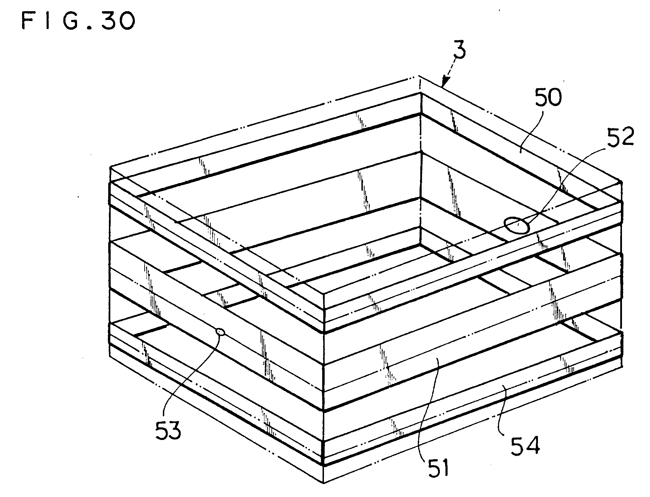

Turning to Fig. 30 showing a fourteenth embodiment of the present invention, the same portions as those of the foregoing embodiments are designated at the common reference numerals so that their repeated description is omitted. Specifically, the present embodiment is directed to the case, in which elastic sealing members 50, 51 and 54 framed to fit the side periphery of the working mold 3 are removably fixed on the side peripheries of the individual divided portions of the working mold 3. In this embodiment, the working mold 3 is formed into a rectangular shape, as shown, and the sealing member 51 is formed with a hole 52 for the injection member 31 and a hole 53 for the discharge port 11. Thus, the sealing effect can be achieved by fitting the sealing members 54, 51 and 50 elastically in the recited order on the side peripheries of the individual divided portions of the working mold 3 integrated.

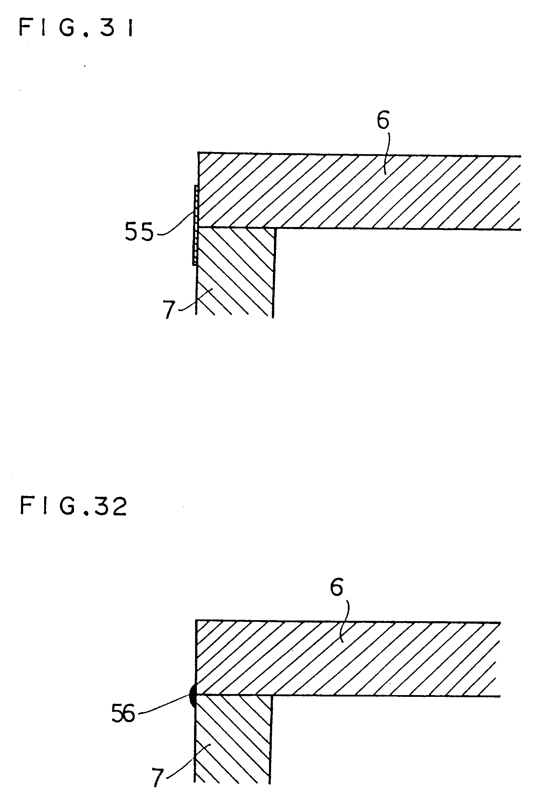

Turning to Fig. 31 showing a fifteenth embodiment of the present invention, the same portions as those of the foregoing embodiments are designated at the common reference numerals so that their repeated description is omitted. Specifically, the present embodiment is constructed such that the sealing structure is made by adhering a sealing member or sealing tape 55 peelably to the side periphery of each of the divided portions of the working mold 3.

Turning to Fig. 32 showing a sixteenth embodiment of the present invention, the same portions as those of the foregoing embodiments are designated at the common reference numerals so that their repeated description is omitted. Specifically, the present embodiment is constructed such that the sealing structure is made by removably applying a sealing member 56 to the side periphery of each of the divided portions of the working mold 3.

The present invention should not be limited to the foregoing embodiments but can be modified in various manners within the gist thereof. For example, the present invention can be applied to various moldings of medical prosthetic articles such as artificial bones, and the denture bases may be either whole or partial. On the other hand, the molding machine to be employed can be exemplified not only by the injection molding machine but by a transfer molding machine or an injection-compression molding machine. Still moreover, the high-molecular resin to be employed can be either of the thermoplastic or thermosetting type and can be exemplified by a polycarbonate resin, a polyolefin resin, a polysulfone resin, a styrol resin, a polyurethane resin or a polyacetal resin. In the embodiments having no sealing layer on the plaster mold surfaces, furthermore, the model, the sprue runner and the air vent may be melted and discharged by using the method, as disclosed in Japanese Patent Publication No. 2023/1982 or the like, but without dividing the plaster mold. On the other hand, the arranging positions of the sealing members and the position of evacuation can be suitably modified within the gist of the present invention. For example, a suitable selection can be made from the sealing members having a sheet shape, the sealing members made of a packing and the sealing members formed of a sealing layer, and these sealing members can be combined to construct the sealing structure. Although the first and second mold bodies are constructed of the dividable cover members and the ring members, at least one of the mold bodies may have its cover member and ring member united. On the other hand, the sheet-shaped sealing members need not be adhered to the mold bodies but may be removably sandwiched inbetween. Moreover, the sheet-shaped sealing members may have their sizes such as widths suitably selected. Still moreover, the working mold should not have its sealing structure limited to those of the foregoing embodiments but may have the same constructed by suitable means. In the foregoing embodiments, on the other hand, the working mold is closed by the fixing members but may be fixed through a packing. Moreover, the working mold may be closed by a closing device of the molding machine with or without the fixing members.

In a method of manufacturing a medical prosthetic article by charging the cavity of a plaster mold with a resin, according to the present invention, the plaster mold has its cavity sealed up, when closed, from the ambient air and charged under a predetermined degree of vacuum with a resin. Thus, it is possible to provide the medical prosthetic article manufacturing method which can produce a molding having a suppressed molding strain.

## Claims

1. A method of manufacturing a medical prosthetic article by charging a cavity (28, 28A, 28B) of a plaster mold (22, 25) with a resin (30), comprising the steps of: sealing up the cavity (28, 28A, 28B) of the plaster mold, when closed, from the ambient air; providing a predetermined degree of vacuum in said cavity (28, 28A, 28B) and charging said cavity (28, 28A, 28B) with the resin (30)
characterized in that
the vacuum is applied to said cavity (28, 28A, 28B) via a discharge port (11, 11A) and the vacuum in the uncharged part of the cavity (28, 28A, 28B) is maintained while said cavity (28, 28A, 28B) is charged with the resin (30).

2. A medical prosthetic article manufacturing method according to claim 1, wherein said predetermined degree of vacuum in said cavity (28, 28A, 28B) is at 66.10³ to 0,0013 N/m² (500 to 0.00001 Torrs).

3. A medical prosthetic article manufacturing method according to claim 1, wherein said plaster mold (22, 25) is fitted in a dividable working mold.

4. A medical prosthetic article manufacturing method according to claim 3, wherein the step of sealing up the cavity (28, 28A, 28B) of said plaster mold (22, 25) from the ambient air includes the sub-step of fitting a sealing member (15, 16, 17) between the divided portions of said working mold.

5. A medical prosthetic article manufacturing method according to claim 3, wherein said step of sealing up the cavity (28, 28A, 28B) of said plaster mold (22, 25) from the ambient air includes the sub-step of covering the periphery of said working mold with a sealing member.

6. A medical prosthetic article manufacturing method according to claim 3, wherein said step of sealing up the cavity (28, 28A, 28B) of said plaster mold (22, 25) from the ambient air includes the sub-step of forming a sealing layer (27) on the inner faces of said plaster mold defining said cavity.

7. A medical prosthetic article manufacturing method according to claim 3, wherein said step of sealing up the cavity (28, 28A, 28B) of said plaster mold (22, 25) from the ambient air includes the sub-step of impregnating said plaster mold (22, 25) with a sealing agent.

8. A sealed mold structure for manufacturing a medical prosthetic article by charging its cavity (28, 28A, 28B) with a resin (30), comprising: a first plaster mold (25) and a second plaster mold (22) defining therein a cavity (28, 28A, 28B) having the contour of a medical prosthetic article to be molded; and sealing means (15, 16, 17, 15A, 16A, 17A, 15B, 16B, 17B, 37, 40, 43, 56) for sealing up the cavity (28, 28A, 28B) in said first plaster mold (25) and said second plaster mold (22), when closed, from the ambient air
characterized by
a sprue runner (23, 23A) communicating with said cavity (28, 28A, 28B), and an air vent (24, 24A) communicating with said cavity (28, 28A, 28B); a first mold body (4) and a second mold body (5) made dividable from each other and confining said first plaster mold (25) and said second plaster mold (22) therein, said first mold body (4) including an upper ring member (7) having said first plaster mold (25) fitted therein, and a top cover member (6) seated on said upper ring member (7), said second mold body (5) including a lower ring member (8) having said second plaster mold (22) fitted therein and seating said upper ring member (7) thereon, and a bottom cover member (9) seating said lower ring member (8) thereon, said upper ring member (7) and lower ring member (8) being formed in their abutting faces with an injection port (10) communicating with said cavity (28, 28A, 28B) via said sprue runner (23, 23A), and a discharge port (11, 11A) communicating with said cavity (28, 28A, 28B) via said air vent (24, 24A), whereby said sealed cavity (28, 28A, 28B) is charged under a vacuum with the resin (30) via said injection port (10) and said sprue runner (23, 23A) to mold the medical prosthetic article.

9. A medical prosthetic article manufacturing sealed mold structure according to claim 8, wherein said sealing means (15, 16, 17, 15A, 16A, 17A, 15B, 16B, 17B, 37, 40, 43, 56) includes a plurality of sealing members sandwiched between said top cover member (6) and said upper ring member (7), between said upper and lower ring members (7, 8) and between said lower ring member (8) and said bottom cover member (9).

10. A medical prosthetic article manufacturing sealed mold structure according to claim 9, wherein said sealing layers (27) have hardness and gas-tightness sufficient for standing the injection pressure of the resin (30)

11. A medical prosthetic article manufacturing sealed mold structure according to claim 9, wherein said top cover member (6), said upper ring member (7), said lower ring member (8) and said bottom cover member (9) are formed with a plurality of grooves (33, 34) in their abutting faces, and wherein said sealing members include packings fitted in said grooves (33, 34).

12. A medical prosthetic article manufacturing sealed mold structure according to claim 8, wherein said sealing means further includes a plurality of sealing layers (27, 27A) sandwiched between the abutting faces of said first and second plaster molds (22, 25).

13. A medical prosthetic article manufacturing sealed mold structure according to claim 8, wherein said sealing means includes a plurality of sealing layers (27, 27A) covering the whole inner faces of said first and second plaster molds (22, 25) defining said cavity (28, 28A, 28B).

14. A medical prosthetic article manufacturing sealed mold structure according to claim 8, wherein said sealing means includes a resin impregnating said first and second sealed molds (22, 25).

15. A medical prosthetic article manufacturing sealed mold structure according to claim 8, wherein said sealing means includes a plurality of sealing members (50, 51, 54) fitted around said injection port (10).

16. A medical prosthetic article manufacturing sealed mold structure according to claim 8, wherein said sealing means includes two hinged covers (56) shaped and sized to removably cover the side peripheries of said first and second mold bodies (22, 25) together substantially in their entirety.

17. A medical prosthetic article manufacturing sealed mold structure according to claim 8, wherein said sealing means includes three sealing members (50, 51, 54) framed to fit the side peripheries of said first and second mold bodies (22, 25) removably fixed on the side peripheries of the individual divided portions of said first and second mold bodies (22, 25), and wherein the intermediate one of said three sealing members are formed with two holes respectively aligned with said injection port (10) and said discharge port (11).

18. A medical prosthetic article manufacturing sealed mold structure according to claim 8, wherein said sealing means includes three sealing tapes (55) adhered peelably to the side peripheries of the individual divided portions of said first and second mold bodies (22, 25).

19. A medical prosthetic article manufacturing sealed mold structure according to claim 8, wherein said sealing means includes three sealing members (55) applied peelably to the side peripheries of the individual divided portions of said first and second mold bodies (22, 25).

## Patentansprüche

1. Herstellungsverfahren für eine medizinische Prothese durch Befüllen eines Hohlraumes (28, 28A, 28B) einer Gipsform (22, 25) mit einem Harz (30), wobei das Herstellungsverfahren folgende Schritte aufweist: Abdichten des Hohlraumes (28, 28A, 28B) der geschlossenen Gipsform von der dieselbe umgebenden Luft; Herstellen eines Vakuums einer vorbestimmten Größe in dem Hohlraum (28, 28A, 28B); und Befüllen des Hohlraumes (28, 28A, 28B) mit dem Harz (30)
dadurch gekennzeichnet, daß
der Hohlraum (28, 28A, 28B) durch eine Auslaßöffnung (11, 11A) evakuiert wird und das Vakuum in dem nichtbefüllten Teil des Hohlraumes (28, 28A, 28B) aufrecht erhalten wird, während der Hohlraum (28, 28A, 28B) mit dem Harz (30) befüllt wird.

2. Herstellungsverfahren für eine medizinische Prothese nach Anspruch 1, wobei die vorbestimmte Größe des Vakuums in dem Hohlraum (28, 28A, 28B) zwischen 66 x 10³ und 0,0013 N/m² (500 und 0,00001 Torr) liegt.

3. Herstellungsverfahren für eine medizinische Prothese nach Anspruch 1, wobei die Gipsform (22, 25) in eine teilbare Arbeitsform eingepaßt wird.

4. Herstellungsverfahren für eine medizinische Prothese nach Anspruch 3, wobei der Schritt des Abdichtens des Hohlraumes (28, 28A, 28B) der Gipsform (22, 25) von der dieselbe umgebenden Luft einen Unterschritt aufweist, in dem ein Dichtungselement (15, 16, 17) zwischen die geteilten Bereiche der Arbeitsform eingepaßt wird.

5. Herstellungsverfahren für eine medizinische Prothese nach Anspruch 3, wobei der Schritt des Abdichtens des Hohlraumes (28, 28A, 28B) der Gipsform (22, 25) von der dieselbe umgebenden Luft einen Unterschritt aufweist, in dem die Außenbereiche der Arbeitsform mit einem Dichtungselement bedeckt werden.

6. Herstellungsverfahren für eine medizinische Prothese nach Anspruch 3, wobei der Schritt des Abdichtens des Hohlraumes (28, 28A, 28B) der Gipsform (22, 25) von der dieselbe umgebenden Luft einen Unterschritt aufweist, in dem auf den inneren, den Hohlraum begrenzenden Flächen der Gipsform eine Dichtungsschicht (27) ausgebildet wird.

7. Herstellungsverfahren für eine medizinische Prothese nach Anspruch 3, wobei der Schritt des Abdichtens des Hohlraumes (28, 28A, 28B) der Gipsform (22, 25) von der dieselbe umgebenden Luft einen Unterschritt aufweist, in dem die Gipsform (22, 25) mit einer Dichtungslösung imprägniert wird.

8. Abgedichtete Gießform zum Herstellen einer medizinischen Prothese durch Befüllen des Hohlraumes (28, 28A, 28B) der Gießform mit einem Harz (30), wobei die Gießform aufweist: eine erste Gipsform (25) und eine zweite Gipsform (22), in deren Innerem ein Hohlraum (28, 28A, 28B) ausgebildet ist, der die Form einer zu gießenden medizinischen Prothese aufweist; und ein Dichtungsmittel (15, 16, 17, 15A, 16A, 17A, 15B, 16B, 17B, 37, 40, 43, 56) zum Abdichten des Hohlraumes (28, 28A, 28B) in der ersten, mit der zweiten Gipsform (22) zusammengeschlossenen Gipsform (25) und von der dieselben umgebenden Luft
gekennzeichnet durch
einen mit dem Hohlraum (28, 28A, 28B) verbundenen Eingießkanal (23, 23A) und einer mit dem Hohlraum (28, 28A, 28B) verbundenen Lüftungsleitung (24, 24A); einen ersten Gießformkörper (4) und einen zweiten Gießformkörper (5), die voneinander trennbar sind und die erste Gipsform (25) und die zweite Gipsform (22) zwischen sich zusammenhalten, wobei der erste Gießformkörper (4) ein oberes Ringelement (7), in das die erste Gipsform (25) eingepaßt ist, und ein oberes Abdeckungselement (6) aufweist, das auf dem oberen Ringelement (7) aufliegt, wobei der zweite Gießformkörper (5) ein unteres Ringelement (8), in das die zweite Gipsform (22) eingepaßt ist und auf dem das obere Ringelement (7) aufliegt, und ein unteres Abdeckungselement (9) aufweist, auf dem das untere Ringelement (8) aufliegt, wobei das obere Ringelement (7) und das untere Ringelement (8) in ihren aneinander angrenzenden Flächen mit einer Einlaßöffnung (10), die mit dem Hohlraum (28, 28A, 28B) durch den Eingießkanal (23, 23A) hindurch verbunden ist, und einer Auslaßöffnung (11, 11A) ausgebildet sind, die mit dem Hohlraum (28, 28A, 28B) durch die Lüftungsleitung (24, 24A) hindurch verbunden ist, wobei der abgedichtete Hohlraum (28, 28A, 28B) unter Vakuum mit dem Harz (30) durch die Einlaßöffnung (10) und den Eingießkanal (23, 23A) befüllbar ist, um die medizinische Prothese zu gießen.

9. Abgedichtete Gießform zum Herstellen einer medizinischen Prothese nach Anspruch 8, wobei das Dichtungsmittel (15, 16, 17, 15A, 16A, 17A, 15B, 16B, 17B, 37, 40, 43, 56) eine Mehrzahl von Dichtungselementen aufweist, die sandwichartig zwischen dem oberen Abdeckungselement (6) und dem oberen Ringelement (7), zwischen dem oberen Ringelement (7) und dem unteren Ringelement (8) und zwischen dem unteren Ringelement (8) und dem unteren Abdeckungselement (9) angeordnet sind.

10. Abgedichtete Geißform zum Herstellen einer medizinischen Prothese nach Anspruch 9, wobei die Dichtungsschichten (27), eine solche Härte und Gasdichtigkeit aufweisen, die ausreichend sind, um dem Einlaßdruck des Harzes (30) standzuhalten.

11. Abgedichtete Gießform zum Herstellen einer medizinischen Prothese nach Anspruch 9, wobei das obere Abdeckungselement (6) das obere Ringelement (7) das untere Ringelement (8) und das untere Abdeckungselement (9) mit einer Mehrzahl von Rillen (33, 34) in ihren aneinander angrenzenden Flächen ausgebildet sind, wobei die Dichtungselemente in die Rillen (33, 34) eingepaßte Dichtungen aufweisen.

12. Abgedichtete Gießform zum Herstellen einer medizinischen Prothese nach Anspruch 8, wobei das Dichtungsmittel ferner eine Mehrzahl von Dichtungsschichten (27, 27A) aufweist, die sandwichartig zwischen den aneinander angrenzenden Flächen der ersten Gipsform (25) und der zweiten Gipsform (22) angeordnet sind.

13. Abgedichtete Gießform zum Herstellen einer medizinischen Prothese nach Anspruch 8, wobei das Dichtungsmittel eine Mehrzahl von Dichtungsschichten (27, 27A) aufweist, die die gesamten inneren, den Hohlraum (28, 28A, 28B) begrenzenden Flächen der ersten Gipsform (25) und der zweiten Gipsform (22) bedecken.

14. Abgedichtete Gießform zum Herstellen einer medizinischen Prothese nach Anspruch 8, wobei das Dichtungsmittel ein Harz aufweist, mit dem die erste abgedichtete Gießform (25) und die zweite abgedichtete Gießform (22) imprägniert sind.

15. Abgedichtete Gießform zum Herstellen einer medizinischen Prothese nach Anspruch 8, wobei das Dichtungsmittel eine Mehrzahl von um die Einlaßöffnung (10) herum angeordneten Dichtungselementen (50, 51, 54) aufweist.

16. Abgedichtete Gießform zum Herstellen einer medizinischen Prothese nach Anspruch 8, wobei das Dichtungsmittel zwei schwenkbare Abdeckungen (56) aufweist, die derart geformt und bemaßt sind, daß sie zusammen die äußeren Seitenbereiche des ersten Gießformkörpers (25) und des zweiten Gießformkörpers (22) im wesentlichen vollständig entfernbar bedecken.

17. Abgedichtete Gießform zum Herstellen einer medizinischen Prothese nach Anspruch 8, wobei das Dichtungsmittel drei Dichtungselemente (50, 51, 54) aufweist, die jeweils derart zu einem Rahmen zusammengefügt sind, daß sie auf die äußeren Seitenbereiche des ersten Gießformkörpers (25) und des zweiten Gießformkörpers (22) angepaßt sind und auf den äußeren Seitenbereichen der einzelnen, von einander abgetrennten Bereiche des ersten Gießformkörpers (25) und des zweiten Gießformkörpers (22) entfernbar angebracht sind, wobei das mittlere der drei Dichtungselemente mit zwei Bohrungen ausgebildet ist, die jeweils auf die Einlaßöffnung (10) bzw. die Auslaßöffnung (11) ausgerichtet sind.

18. Abgedichtete Gießform zum Herstellen einer medizinischen Prothese nach Anspruch 8, wobei das Dichtungsmittel drei Dichtbänder (55) aufweist, die ablösbar auf die Seitenbereiche der einzelnen, von einander abgetrennten Bereiche des ersten Gießformkörpers (25) und des zweiten Gießformkörpers (22) aufgeklebt sind.

19. Abgedichtete Gießform zum Herstellen einer medizinischen Prothese nach Anspruch 8, wobei das Dichtungsmittel drei Dichtungselemente (55) aufweist, die ablösbar auf die äußeren Seitenbereiche der einzelnen, von einander getrennten Bereiche des ersten Gießformkörpers (25) und des zweiten Gießformkörpers (22) aufgebracht sind.

## Revendications

1. Procédé de confection d'une prothèse médicale en chargeant une cavité (28, 28A, 28B) d'un moule de plâtre (22, 25) d'une résine (30), comportant les étapes consistant à : isoler hermétiquement la cavité (28, 28A, 28B) du moule de plâtre, une fois fermé, de l'air ambiant; appliquer un degré de vide prédéterminé dans ladite cavité (28, 28A, 28B) et charger ladite cavité (28, 28A, 28B) avec la résine (30)
caractérisé en ce que
le vide est appliqué à ladite cavité (28, 28A, 28B) par une ouverture de décharge (11, 11A) et le vide dans la partie non chargée de la cavité (28, 28A, 28B) est maintenu pendant que ladite cavité (28, 28A, 28B) est chargée avec la résine (30).

2. Procédé de confection d'une prothèse médicale selon la revendication 1, dans lequel ledit degré de vide prédéterminé dans ladite cavité (28, 28A, 28B) est de 66·10³ à 0,0013 N/m² (500 à 0,00001 Torrs).

3. Procédé de confection d'une prothèse médicale selon la revendication 1, dans lequel ledit moule de plâtre (22, 25) est monté dans un moule de travail pouvant être divisé.

4. Procédé de confection d'une prothèse médicale selon la revendication 3, dans lequel l'étape consistant à isoler hermétiquement la cavité (28, 28A, 28B) dudit moule de plâtre (22, 25) de l'air ambiant comprend la sous-étape consistant à monter un élément d'étanchéité (15, 16, 17) entre les parties séparées dudit moule de travail.

5. Procédé de confection d'une prothèse médicale selon la revendication 3, dans lequel ladite étape consistant à isoler hermétiquement la cavité (28, 28A, 28B) dudit moule de plâtre (22, 25) de l'air ambiant comprend la sous-étape consistant à recouvrir la périphérie dudit moule de travail avec un élément d'étanchéité.

6. Procédé de confection d'une prothèse médicale selon la revendication 3, dans lequel ladite étape consistant à isoler hermétiquement la cavité (28, 28A, 28B) dudit moule de plâtre (22, 25) de l'air ambiant comprend la sous-étape consistant à former une couche d'étanchéité (27) sur les faces intérieures dudit moule de plâtre formant ladite cavité.

7. Procédé de confection d'une prothèse médicale selon la revendication 3, dans lequel ladite étape consistant à isoler hermétiquement la cavité (28, 28A, 28B) dudit moule de plâtre (22, 25) de l'air ambiant comprend la sous-étape consistant à imprégner ledit moule de plâtre (22, 25) d'un agent d'étanchéité.

8. Structure de moule étanche pour confectionner une prothèse médicale en chargeant sa cavité (28, 28A, 28B) avec une résine (30), comprenant : un premier moule de plâtre (25) et un deuxième moule de plâtre (22) formant une cavité (28, 28A, 28B) ayant le contour d'une prothèse médicale à mouler; et un moyen d'étanchéité (15, 16, 17, 15A, 16A, 17A, 15B, 16B, 17B, 37, 40, 43, 56) pour isoler hermétiquement la cavité (28, 28A, 28B) dans ledit premier moule de plâtre (25) et ledit deuxième moule de plâtre (22), une fois fermés, de l'air ambiant
caractérisée par
un canal de coulée (23, 23A) communiquant avec ladite cavité (28, 28A, 28B), et une mise à l'air libre (24, 24A) communiquant avec ladite cavité (28, 28A, 28B); un premier corps de moule (4) et un deuxième corps de moule (5) conçus pour pouvoir se séparer l'un de l'autre et enfermant dans eux le premier moule de plâtre (25) et le deuxième moule de plâtre (22), le premier corps de moule (4) comprenant un élément annulaire supérieur (7) dans lequel est monté ledit premier moule de plâtre (25), et un élément de couvercle supérieur (6) reposant sur ledit élément annulaire supérieur (7), ledit second corps de moule (5) comprenant un élément annulaire inférieur (8) dans lequel est monté ledit deuxième moule de plâtre (22) et sur lequel repose ledit élément annulaire supérieur (7), et un élément de couvercle de fond (9) sur lequel repose ledit élément annulaire inférieur (8), lesdits élément annulaire supérieur (7) et élément annulaire inférieur (8) étant pourvus dans leurs faces de bout d'un orifice d'injection (10) communiquant avec ladite cavité (28, 28A, 28B) par l'intermédiaire dudit canal de coulée (23, 23A), et une ouverture de décharge (11, 11A) communiquant avec ladite cavité (28, 28A, 28B) par l'intermédiaire de ladite mise à l'air libre (24, 24A), ladite cavité étanche (28, 28A, 28B) étant chargée sous un certain vide avec la résine (30) par ledit orifice d'injection (10) et ledit canal de coulée (23, 23A) pour mouler la prothèse médicale.

9. Structure de moule étanche de confection de prothèse médicale selon la revendication 8, dans laquelle ledit moyen d'étanchéité (15, 16, 17, 15A, 16A, 17A, 15B, 16B, 17B, 37, 40, 43, 56) comprend une pluralité d'éléments d'étanchéité serrés entre ledit élément de couvercle supérieur (6) et ledit élément annulaire supérieur (7), entre lesdits éléments annulaires supérieur et inférieur (7, 8) et entre ledit élément annulaire inférieur (8) et ledit élément de couvercle inférieur (9).

10. Structure de moule étanche de confection de prothèse médicale selon la revendication 9, dans laquelle lesdites couches d'étanchéité (27) ont une dureté et une étanchéité aux gaz suffisantes pour supporter la pression d'injection de la résine (30).

11. Structure de moule étanche de confection de prothèse médicale selon la revendication 9, dans laquelle ledit élément de couvercle supérieure (6), ledit élément annulaire supérieur (7), ledit élément annulaire inférieur (8) et ledit élément de couvercle inférieur (9) sont formés avec une pluralité de rainures (33, 34) dans leurs faces de bout, et dans laquelle lesdits éléments d'étanchéité comprennent des garnitures montées dans lesdites rainures (33, 34).

12. Structure de moule étanche de confection de prothèse médicale selon la revendication 8, dans laquelle ledit moyen d'étanchéité comprend de plus une pluralité de couches d'étanchéité (27, 27A) serrées entre les faces de bout desdits premier et deuxième moules de plâtre (22, 25).

13. Structure de moule étanche de confection de prothèse médicale selon la revendication 8, dans laquelle ledit moyen d'étanchéité comprend une pluralité de couches d'étanchéité (27, 27A) recouvrant la totalité des faces intérieures desdits premier et deuxième moules de plâtre (22, 25) définissant ladite cavité (28, 28A, 28B).

14. Structure de moule étanche de confection de prothèse médicale selon la revendication 8, dans laquelle ledit moyen d'étanchéité comprend l'imprégnation desdits premier et deuxième moules étanches (22, 25) par de la résine.

15. Structure de moule étanche de confection de prothèse médicale selon la revendication 8, dans laquelle ledit moyen d'étanchéité comprend une pluralité d'éléments d'étanchéité (50, 51, 54) montés autour dudit orifice d'injection (10).

16. Structure de moule étanche de confection de prothèse médicale selon la revendication 8, dans laquelle ledit moyen d'étanchéité comprend deux couvercles articulés (56) de formes et de dimensions lui permettant de recouvrir en même temps de façon démontable les périphéries latérales desdits premier et deuxième corps de moule (22, 25) sensiblement dans leur totalité.

17. Structure de moule étanche de confection de prothèse médicale selon la revendication 8, dans laquelle ledit moyen d'étanchéité comprend trois éléments d'étanchéité (50, 51, 54) encadrés pour être adaptés aux périphéries latérales desdits premier et deuxième corps de moule (22, 25) fixés de façon démontable sur les périphéries latérales des parties séparées individuelles desdits premier et deuxième corps de moule (22, 25), et dans laquelle celui qui est intermédiaire desdits trois éléments d'étanchéité sont formés avec deux trous respectivement alignés avec ledit orifice d'injection (10) et ladite ouverture de décharge (11).

18. Structure de moule étanche de confection de prothèse médicale selon la revendication 8, dans laquelle ledit moyen d'étanchéité comprend trois bandes d'étanchéité (55) collées de façon détachable aux périphéries latérales des parties séparées individuelles desdits premier et deuxième corps de moule (22, 25).

19. Structure de moule étanche de confection de prothèse médicale selon la revendication 8, dans laquelle ledit moyen d'étanchéité comprend trois éléments d'étanchéité (55) appliqués de façon détachable aux périphéries latérales des parties séparées individuelles desdits premier et deuxième corps de moule (22, 25).
